# EUROPÄISCHE PATENTANMELDUNG

(11) **EP 2 779 053 A1**
(43) Veröffentlichungstag der Anmeldung: **17.09.2014**
(21) Anmeldenummer: 14153106.1
(22) Anmeldetag: 29.01.2014
(51) Int. Cl.: G06Q 10/08, G06K 19/07

(54) **Wäscheetikett**

(30) Priorität: 13.03.2013 DE 202013101090 U
(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(57) **Zusammenfassung**

Es wird ein Wäscheetikett, welches mit einem waschbaren Produkt verbunden ist und ein Chipmodul mit einem fernlesbaren Speicher umfasst, beschrieben.

Im Speicher des Chipmoduls sind wäschespezifische Angaben gespeichert. Der Speicher des Chipmoduls in einen Speicherbereich EPC (12) unterteilt ist, der zur Speicherung von Produkt-Codes nach GS1 "Global Standards" ausgelegt ist sowie mindestens 64 Bit und höchstens 204 Bit umfasst und in einen Speicherbereich TID (10) zur Speicherung einer individuellen Transponderidentifikationsnummer ausgelegt ist, aber in dem Speicherbereich EPC (12) anstelle des Produkt-Codes nach GS1 wenigstens die wäschespezifischen Angaben des Produkts gespeichert sind. Allen wäschespezifischen Angaben sind natürliche Dualzahlen zugeordnet, die die maximalen Varianten abdecken und eine individuelle Position in einem seriellen Datenwort einnehmen. Das serielle Datenwort ist verknüpft mit der Transponderidentifikationsnummer im Speicherbereich TID (10) nach Maßgabe eines Algorithmus verschlüsselt. Die Gesamtheit der wäschespezifischen Angaben ist anstelle des EPC-Codes im Speicherbereich EPC (12) des Chipmoduls gespeichert.

## Beschreibung

Die Erfindung betrifft ein Wäscheetikett nach dem Oberbegriff des Anspruchs 1.

Aus der DE 602 24 519 T2 ist eine Vorrichtung zum Lagern von Gegenständen, die von beliebigen, identifizierten Benutzern benutzt werden können, bekannt. Bei den Gegenständen handelt es sich speziell um waschbare Produkte, die mit einem Wäscheetikett versehen sind. Die Wäscheetiketten enthalten wäschespezifischen Angaben, wie Produktart, Größe, Material, Farbe, Waschtemperatur, Waschmittel u.s.w. und sind mittels eines Lesegeräts fernlesbar.

Waschbare Produkte aus dem industriellen und gewerblichen Bereich sowie insbesondere aus Krankenhäusern werden nach Benutzung in großer Stückzahl in Transportbehältern gesammelt und zu einer Wasch- und Aufbereitungseinrichtung gebracht, wo sie gewaschen, getrocknet, gebügelt und eventuell repariert werden und anschließend gebrauchsfertig wieder den Nutzern zur erneuten Benutzung zur Verfügung gestellt werden. Zur Erfassung, Steuerung und Kontrolle der waschbaren Produkte an Stationen im Nutzungs- und Behandlungskreislauf werden die in Speichern der Wäscheetiketten enthaltenen Angaben mittels Lesegeräten ferngelesen. Solange die waschbaren Produkte mit den Wäscheetiketten einzeln in den Erfassungsbereich des Lesegerätes gelangen, ist der Lesevorgang unproblematisch. Es könnten zahlreiche unterschiedliche Angaben aus einem oder mehreren Speicherbereichen im Speicher des Wäscheetiketts für Nutzer gezielt unter Angabe von Adressen der Speicherplätze oder als Ganzes jeweils auf Anforderung eines Lesegeräts zu diesem gesendet werden.

Wenn allerding eine Vielzahl waschbarer Produkte mit den Wäscheetiketten gleichzeitig in den Erfassungsbereich des Lesegerätes gelangen, ist eine vom Lesegerät gesteuerte Vereinzelung vorzunehmen, denn es kann jeweils nur ein Wäscheetikett zur Zeit gelesen werden. Beim Vereinzeln werden z. B. nach Beginn einer Aussendung eines zuerst sendenden Wäscheetiketts sofort alle übrigen Wäscheetiketten durch einen vom Lesegerät gesendeten Stopp-Befehls an einer eigenen Aussendung gehindert, bis die Aussendung des zuerst sendenden Wäscheetiketts beendet und erfasst ist. Anschließend werden die übrigen Wäscheetiketten wieder zum Senden aufgefordert. Dabei wird davon ausgegangen, dass wiederum eines der verbleibenden Wäscheetiketten zuerst mit einer Aussendung beginnt, worauf wiederum alle übrigen Wäscheetiketten durch einen vom Lesegerät gesendeten Stopp-Befehls an einer eigenen Aussendung gehindert werden. Diese Vorgänge werden solange wiederholt, bis alle Wäscheetiketten gelesen wurden.

Gelangen die Wäscheetiketten einzeln in den Erfassungsbereich des Lesegerätes, dauert die Übermittlung von Informationen zum Lesegerät nur wenige Millisekunden. Wenn bei einer Vielzahl von Wäscheetiketten diese vereinzelt werden müssen, addieren sich die Übertragungszeiten nicht mehr linear, sondern steigen überproportional an, da wegen Kollisionen durch gleichzeitiges Senden mehrerer Wäscheetiketten die Übertragungen von Daten teilweise mehrmals wiederholt werden müssen. Die Übertragung der Daten aller Wäscheetiketten kann dann mehrere Sekunden dauern. Zeit für einen Dialog zwischen den Wäscheetiketten und dem Lesegerät zur gezielten Adressierung von Speicherplätzen und Übertragen der Inhalte ist dann nicht mehr vorhanden. Dies gilt vor allem, wenn Wäscheetiketten in Wäschesäcken oder Wäschecontainern, während sie sich bewegen, erfasst werden sollen.

Der Erfindung liegt die Aufgabe zu Grunde, ein Wäscheetikett zu schaffen, das sowohl zahlreiche wäschespezifische und weitere Angaben speichert als auch ermöglicht, diese Angaben selbst bei einer erforderlichen Vereinzelung einer Vielzahl von Wäscheetiketten innerhalb kurzer Zeit zum Lesegerät zu übertragen.

Diese Aufgabe wird bei einem Wäscheetikett nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Das bei der Erfindung eingesetzte Wäscheetikett umfasst einen Speicher, der in einen Speicherbereich EPC und einen Speicherbereich TID unterteilt ist, wie er von Detektierplättchen für Produktbezeichnungen bekannt ist. Der Speicherbereich EPC ist zur Speicherung eines elektronischen Produktcodes nach GS1/EPCglobal Tag Data Standard und der Speicherbereich TID zur Speicherung einer Transponderidentifikationsnummer ausgelegt. Danach ist für den Speicherbereich EPC eine Ziffernfolge von mindestens 64 Bit und höchstens 204 Bit vorgesehen. Bekannt sind Ziffernfolgen von 64 Bit (EPC-64), 96 Bit (EPC-06) und 128 Bit (GS1-128), wobei jedoch EPC-64 ungebräuchlich ist. Die Transponderidentifikationsnummer wird vom Chiphersteller exklusiv, also ohne Wiederholung vergeben und unveränderbar im Speicherbereich TID gespeichert. Am Markt etabliert sind Systeme aus Detektierplättchen und Lesegeräten, bei denen ein Lese- und Vereinzelungsalgorithmus zum Lesen des Inhalts des Speicherbereichs EPC oder des Speicherbereichs EPC in Verbindung mit dem Speicherbereich TID in einem einzigen Leseschritt ohne zusätzlichen Zwischendialog zwischen Detektierplättchen und Lesegerät optimiert ist. Das Wäscheetikett nach der Erfindung nutzt für das schnelle Lesen den Speicherbereich EPC und den Speicherbereich TID, wobei jedoch der Speicherbereich EPC keinen elektronischen Produktcode nach GS1 enthält, sondern wäschespezifische und weitere Angaben.

Mit dem auf maximal 204 Bit begrenzten Speicherbereich ist es möglich, die Daten dieses verändert belegten und genutzten Speicherbereichs EPC zusammen mit den Daten des Speicherbereichs TID beim ersten Lesen des Chipmoduls vom Lesegerät in einem einzigen Lesezyklus vollständig zu übertragen. Wenn die Wäscheetiketten nur kurzzeitig in das Lesefeld eines Lesegerätes gelangen und eventuell zusätzlich noch eine Vereinzelung mehrerer Wäscheetiketten mittels eines Antikollisionsverfahrens nötig ist, kann es bei größeren Speicherbereichen EPC als 204 Bit, wie sie in späteren Standards eventuell eingeführt werden könnten, zu Erkennungs- und Lesefehlern kommen.

Für zusätzliche Daten, die nicht zeitkritisch erfasst werden müssen, kann als Speichererweiterung ein R/W-Bereich eingesetzt werden, der je nach Chiptyp verschiedene Speichergrößen haben kann.

Da die Bit-Länge des Speicherbereichs EPC begrenzt ist, können die wäschespezifischen Angaben nicht im Klartext hinterlegt werden. Vielmehr werden sie in komprimierter Form derart dargestellt, dass alle praxisüblichen Variationen der Abstufungen der Angaben als natürliche Dualzahlen, also z. B. 0000, 0001, 0010, 0011 u. s. w. dargestellt werden Den entsprechenden Angaben werden individuelle Speicherplätze in einem Datenwort zugeordnet. Bei Wäscheetiketten derselben Version sind die Speicherplätze einheitlich. Sie sind durch spezielle Ordnungszahlen und Stellen im Datenwort angegeben. Bei anderen Versionen sind andere individuelle Speicherplätze in im Datenwort möglich. Die Ordnungszahlen im Datenwort repräsentiert die Art der Angabe und die Zahlen repräsentieren die abgestuften Größen oder Varianten der Angabe. Bei sehr vielen Varianten beanspruchen die Angaben mehr Stellen als nur bei wenigen Varianten einer Angabe.

Ein die Angaben enthaltenes Datenwort wird nicht direkt, sondern in einer verschlüsselten Form im Speicherbereich EPC gespeichert. Die Verschlüsselung des Datenworts erfolgt unter Einbeziehung der Transponderidentifikationsnummer aus dem Speicherbereich TID nach Maßgabe eines Verschlüsselungsalgorithmus. Aufgrund der Verschlüsselung mit der exklusiv vergebenen Transponderidentifikationsnummer ergeben sich bei identischen wäschespezifischen und anderen Angaben jeweils unterschiedliche verschlüsselte Daten. Ein Rückschluss auf Art und Größe der Angaben ist somit nicht möglich. Dadurch wird ein Ausforschen des Aufbaus und der Bedeutung der Angaben im Datenwort mit dem Ziel möglicher Manipulationen erschwert.

Gemäß einer Weiterbildung können als weitere wäschespezifische Angabe die Anzahl der durchgeführten Waschgänge gespeichert sein und der Speicherbereich EPC zur Aktualisierung der Anzahl der durchgeführten Waschgänge auch beschreibbar sein.

Die Angabe der durchgeführten Waschgänge kann für die maximal zulässige Einsatzhäufigkeit eines waschbaren Produkts wesentlich sein. Durch Einbindung in das Konzept der verschlüsselten Speicherung der Daten wird auch diese wichtige Angabe gegen mögliche Manipulationen verbessert geschützt.

Außerdem kann im Datenwort zusätzlich eine Signatur enthalten sein, mittels der die Gültigkeit des verschlüsselt gespeicherten Datenworts nach dessen Entschlüsselung überprüfbar ist.

Dies ermöglicht, gültige von ungültigen Wäscheetiketten zu unterscheiden. Denn an sich wäre es möglich, ein normgerecht beschriebenes Detektierplättchen mit einem echten von GS1 autorisierten elektronischen Produktcode einzuschleusen und dessen Angaben der Entschlüsselungsprozedur zu unterziehen. Hierbei würde jedoch ein entschlüsseltes Datenwort entstehen, das völlig unsinnige Angaben enthält. Nur wenn die Signatur nach Entschlüsselung des verschlüsselten Speicherinhalts gültig ist, kann auch der restliche Inhalt des Speicherbereichs EPC als gültig angesehen werden.

Weiterhin können im Datenwort zusätzlich benutzerspezifische Angaben, wie Name, Adresse oder geografische Koordinaten enthalten sein.

Dadurch wird eine personenbezogene oder örtliche Zuordnung der waschbaren Produkte ermöglicht, was die Logistik erleichtert und Diebstahl aufdecken kann. Auch in diesem Fall sind wichtige Angabe gegen mögliche Manipulationen verbessert geschützt.

Vorzugsweise sind im Datenwort zusätzlich Versionsangaben enthalten, mittels denen über eine vom Lesegerät zugängliche Datenbank die Strukturen im Datenwort und deren Inhalte verfügbar sind.

Dabei können Angaben über unterschiedliche Strukturen des Datenworts Inhalte der Angaben im Datenwort sowie deren Bit-Position oder Ordnungszahl und deren Bit-Länge oder Stellenzahl beinhalten.

Durch Versionsangaben können unterschiedlich aufgebaute Datenworte erkannt und unterschieden werden. So können je nach Art der waschbaren Produkte unterschiedliche wäschespezifische Angaben erforderlich oder sinnvoll sein und diese müssen von anderen waschbaren Produkten unterschieden werden können. Da der Speicherplatz aber begrenzt ist, müssen dafür andere weniger wichtige oder sinnvolle Angaben entfallen. Auch kann es erforderlich sein, Angaben zu modifizieren, in dem die Abstufungen variabler Angaben verändert werden oder Ordnungszahlen und Stellen, also die von den Angaben belegten Plätze und deren Größe im Datenwort verändert werden. Mit Versionsangaben ist das System daher sehr flexibel an geänderte Anforderungen anpassbar. Aufgrund der Versionsangaben ist in Verbindung mit einer Datenbank die richtige Zuordnung der Angaben im Datenwort möglich.

Eine Weiterbildung sieht vor, dass mittels der im Datenwort enthaltenen Angaben Wasch- und/oder logistische Einrichtungen steuerbar sind.

Dadurch kann die Handhabung der waschbaren Produkte im Benutzungs- und Behandlungskreislauf teilweise automatisiert werden. Fehlerhafte Behandlungen und Transporte lassen sich so reduzieren.

Weiterhin kann der Speicher des Chipmoduls zusätzlich in einen Speicherbereich R/W unterteilt sein, in dem analog zum Speicherbereich EPC ebenfalls Angaben wie Eigentümer, Gewicht, Herstellungsjahr verschlüsselt gespeichert sind, wobei die Angaben im Speicherbereich R/W nur im vereinzelten Zustand des Wäscheetiketts nach Aufforderung durch ein Lesegerät lesbar und beschreibbar sind.

Dieser Speicherbereich erweitert die Gesamtspeicherkapazität des Wäscheetiketts, ohne jedoch die Lesegeschwindigkeit des zeitkritisch lesbaren Speicherbereichs EPC zu mindern.

Nachfolgend wird die Erfindung anhand eines Ausführungsbeispiels erläutert, dass in der Zeichnung dargestellt ist. Darin zeigen:
- Fig. 1: einen prinzipiellen Aufbau eines Speichers eines Wäscheetiketts,
- Fig. 2: ein Flussdiagramm eines Lese- und Entschlüsselungsvorgangs
- Fig. 3: ein Flussdiagramm eines erstmaligen Verschlüsselungs- und Schreibvorgangs,
- Fig. 4: ein Flussdiagramm eines weiteren Verschlüsselungs- und Schreibvorgangs
- Fig. 5: ein Beispiel für den Aufbau eines Datenworts für ein Wäscheetikett als ersten Abschnitt des Datenworts, welches verschlüsselt im Speicherbereich EPC gespeichert ist und
- Fig. 6: ein Beispiel für den Aufbau eines Datenworts für ein Wäscheetikett, welches verschlüsselt im Speicherbereich R/W gespeichert ist..

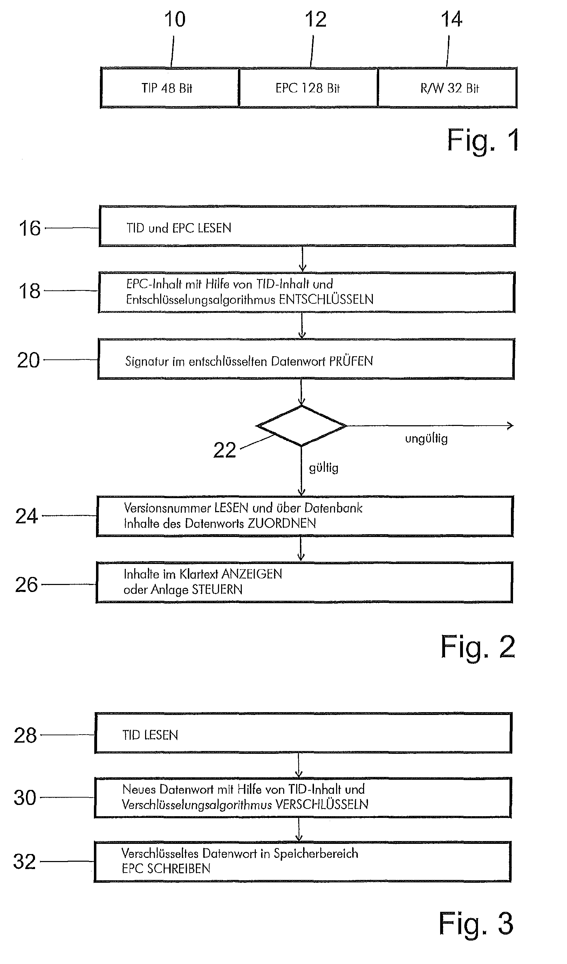

Fig. 1 zeigt einen prinzipiellen Aufbau eines Speichers eines Wäscheetiketts. Der Speicher ist in mehrere Bereiche unterteilt. Ein erster Speicherbereich TID 10 enthält eine vom Chiphersteller vergebene, nicht veränderbare exklusive Transponderidentifikationsnummer. Exklusiv bedeutet, dass jede Transponderidentifikationsnummer nur einem einzigen Transponder vergeben wurde und sich bei demselben Hersteller nie wiederholt. Diese Transponderidentifikationsnummer besteht typischerweise aus 48 Bit. Ein zweiter Speicherbereich EPC 12 enthält in verschlüsselter Form wäschespezifische und weitere Angaben. Dieser Speicherbereich umfasst typischerweise 96 bis 128 Bit. Optional kann auch noch ein dritter Speicherbereich R/W 14 enthalten sein, der vom Nutzer frei belegbar ist. Dieser dritte Speicherbereich wird jedoch nicht beim Vereinzeln gelesen sondern müsste individuell vom Lesegerät angesprochen und adressiert werden.

Dieser Speicherbereich ist vom Nutzer veränderlich und je nach Chiptyp in verschiedenen Speichergrößen verfügbar.

Fig. 2 zeigt ein Flussdiagramm eines Lese- und Entschlüsselungsvorgangs. Ist ein Wäscheetikett bereits mit einem verschlüsselten Datenwort beschrieben, werden zunächst mittels des Lesegeräts die Speicherbereiche TID und EPC als Vorgang 16 gelesen. Anschließend werden als Vorgang 18 die Inhalte der Speicherbereiche TID und EPC einem Entschlüsselungsalgorithmus unterzogen. Nach Durchführung der Entschlüsselung des Datenworts liegt der Speicherinhalt des Speicherbereichs EPC als duale Zahlenfolge vor, die abhängig von der die Stellen im Datenwort belegenden Dualzahl eine wäschespezifische oder andere Angabe enthält. Als Vorgang 20 wird eine Signatur im entschlüsselten Datenwort geprüft. Ist die Signatur ungültig, wird nach einer Verzweigungsstelle 22 die Verarbeitung abgebrochen. Ist die Signatur gültig, wird als Vorgang 24 eine Versionsnummer gelesen und über eine Datenbank werden dem Inhalt des Datenworts den jeweiligen Bit konkrete Angaben wie Artikelart, Größe, Waschtemperatur zugeordnet. In einem abschließenden Vorgang 26 können die Angaben auf einem Display des Lesegeräts im Klartext angezeigt werden oder auch zur Steuerung von Behandlungsanlagen eingesetzt werden.

Fig. 3 zeigt ein Flussdiagramm eines erstmaligen Verschlüsselungs- und Schreibvorgangs. Vor einem ersten Beschreiben des Speicherbereichs EPC wird die Transponderidentifikationsnummer des Speicherbereichs TID als Vorgang 28 gelesen. Das zu verschlüsselnde Datenwort mit wäschespezifischen Angaben und weiteren Angaben wird dann zusammen mit der Transponderidentifikationsnummer einem Verschlüsselungsalgorithmus als Vorgang 30 unterzogen. Das Ergebnis der Verschlüsselung wird anschließend als Vorgang 32 in den Speicherbereich EPC geschrieben.

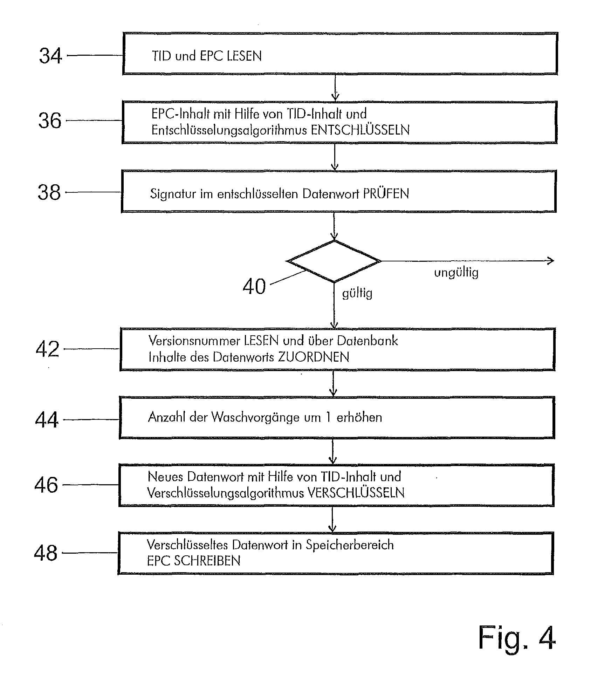

Fig. 4 zeigt ein Flussdiagramm eines weiteren Verschlüsselungs- und Schreibvorgangs, wie bei Aktualisierung der Angabe für die absolvierten Waschvorgänge erforderlich ist. Als Vorgang 34 werden die Speicherbereiche EPC und TID gelesen und die Inhalte der Speicherbereiche TID und EPC als Vorgang 36 einem Entschlüsselungsalgorithmus unterzogen. Als Vorgang 38 wird eine Signatur im entschlüsselten Datenwort geprüft. Ist die Signatur ungültig, wird nach einer Verzweigungsstelle 40 die Verarbeitung abgebrochen. Ist die Signatur gültig, wird als Vorgang 42 eine Versionsnummer gelesen und über eine Datenbank wird durch Lesen der entsprechenden Bit ermittelt, wie groß die Anzahl der bereits absolvierten Waschvorgänge ist. Als Vorgang 44 wird die Anzahl der absolvierten Waschvorgänge um die Zahl eins erhöht. Anschließend wird als Vorgang 46 das geänderte Datenwort zusammen mit der Transponderidentifikationsnummer einem Verschlüsselungsalgorithmus unterzogen. Das Ergebnis der Verschlüsselung wird dann als Vorgang 48 in den Speicherbereich EPC geschrieben. Obgleich nur die Dualzahl einer einzigen Angabe im Datenwort verändert wurde, unterscheidet sich der neue Speicherinhalt im Speicherbereich EPC vollständig von dem vorherigen.

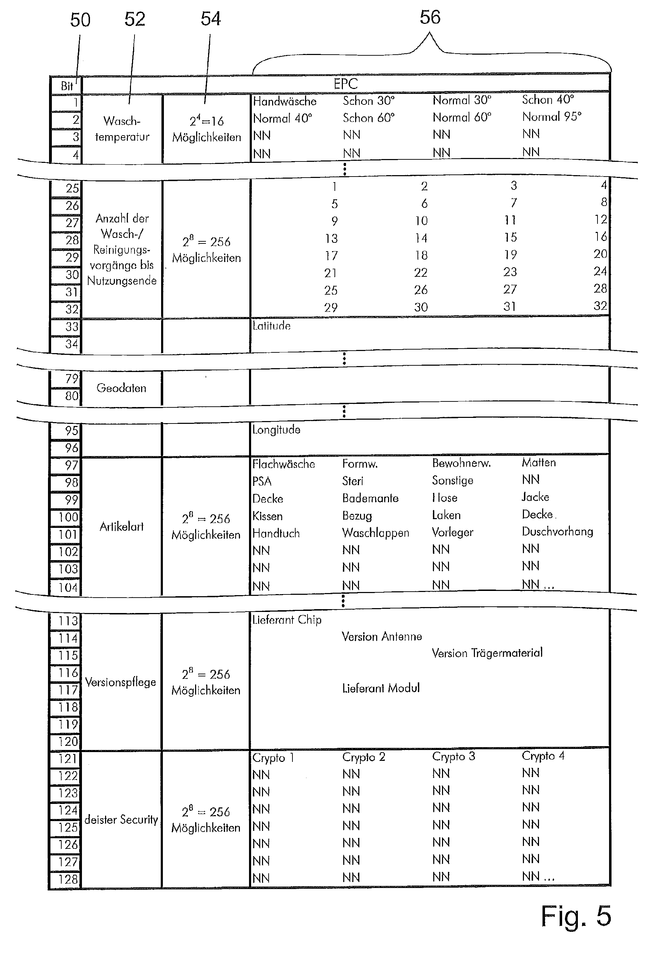

Fig. 5 zeigt ein Beispiel für den Aufbau eines Datenwortes für ein Wäscheetikett als Tabelle.

Es handelt sich hier um den Aufbau eines Datenworts für den Speicherbereich EPC mit einer Speicherlänge von 128 Bit. In einer Spalte 50 sind die Ordnungszahlen der Bit angegeben. In einer Spalte 52 findet sich eine Benennung der Angabe. Die vertikale Ausdehnung lässt erkennen, wie viele Bit die Angabe im Datenwort belegt. In einer Spalte 54 sind die an Zahlen der Möglichkeiten angegeben. Die Anzahl der Möglichkeiten ergibt sich aus der Potenz der Basis 2 mit der Stellen Anzahl der Bit in vertikaler Ausdehnung. In einem Spaltenfeld 56 aus vier Spalten sind schließlich noch konkret genannte Abstufungen der in Spalte 52 benannten Angaben aufgeführt.

So repräsentieren 4 Bit beginnend mit der Ordnungszahl 1 die Waschtemperatur. Mit 4 Bit lassen sich 16 Möglichkeiten darstellen. Als Beispiel sind Handwäsche, schon Wäsche, normal Wäsche bei verschiedenen Temperaturen dargestellt.

8 Bit beginnend mit der Ordnungszahl 97 bis zur Ordnungszahl 104 stellen die Artikelart dar. Mit einer Stellenzahl von 8 Bit lassen sich 256 Möglichkeiten darstellen. Im Spaltenfeld 56 sind dazu Beispiele für Artikel angegeben.

Eine zur Prüfung der Gültigkeit verwendete Signatur ist im gezeigten Beispiel durch 8 Bit, beginnend mit der Ordnungszahl 121 bis zur Ordnungszahl 128 wiedergegeben. Bei der Signatur handelt es sich um eine Konstante achtstellige Dualzahl, die dem Lesegerät bekannt ist. Wenn nach Lesen der Speicherinhalte CDI und EPC sowie entschlüsselten ein entschlüsseltes Datenwort vorliegt, werden die 8 Bit beginnend mit der Ordnungszahl 121 bis zur Ordnungszahl 128 überprüft. Entspricht die dort vorhandene Dual Zahl der dem Lesegerät bekannten Dualzahl als Signatur, wird das Datenwort als gültig gewertet.

Weiterhin ist durch 8 Bit beginnend mit der Ordnungszahl 113 bis zur Ordnungszahl 120 eine Versionsangabe im Datenformat vorhanden. Anhand der Versionsangabe wird durch Abfragen einer Datenbank ermittelt, welchen Ordnungszahlen der Beginn einer Angabe entspricht, wie viele Stellen diese Angabe hat und wie die Benennung der Angabe lautet.

Durch Verwendung der Versionsangaben ist das System nicht auf eine starre Festlegung der Angaben im Datenwort beschränkt, sondern kann sehr flexibel geänderten Anforderungen angepasst werden.

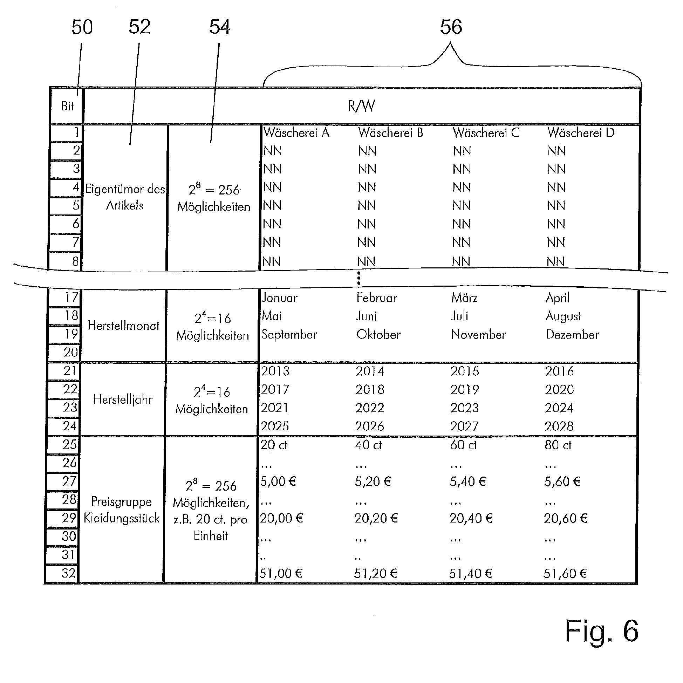

Fig. 6 zeigt ein Beispiel für den Aufbau eines Datenworts für ein Wäscheetikett, welches verschlüsselt im Speicherbereich R/W gespeichert ist.. Es handelt sich hier um den Aufbau eines Datenworts mit einer Speicherlänge von 32 Bit. Wie bereits in Fig. 5 erläutert, sind auch hier in einer Spalte 50 die Ordnungszahlen der Bit angegeben. In einer Spalte 52 findet sich eine Benennung der Angabe. Die vertikale Ausdehnung lässt erkennen, wie viele Bit die Angabe im Datenwort belegt. In einer Spalte 54 sind die an Zahlen der Möglichkeiten angegeben. Die Anzahl der Möglichkeiten ergibt sich aus der Potenz der Basis 2 mit der Stellen Anzahl der Bit in vertikaler Ausdehnung. In einem Spaltenfeld 56 aus vier Spalten sind schließlich noch konkret genannte Abstufungen der in Spalte 52 benannten Angaben aufgeführt.

Wenn die Anzahl der benötigten Speicherbereiche zunimmt, in denen Zählerwerte oder andere veränderbare Parameter gespeichert werden sollen, kommt der R/W-Bereich zum Einsatz. Der Speicher des R/W-Bereich ist vom Chiptyp abhängig in verschiedenen Größen verfügbar. Das Lesen und Schreiben des R/W-Bereichs kann mit dem gleichen Ablauf erfolgen, wie im EPC-Bereich unter Hinzuziehung der Angaben des TID Bereichs und des EPC-Bereichs, bei letzterem wird die Versionsnummer berücksichtigt.

Als Beispiel für im R/W-Bereich zu speichernde Angabe sind Eigentümer und Gewicht des waschbaren Produkts. Die Angabe "Eigentümer" belegt hier 8 Bit beginnend mit der Ordnungszahl 1 bis zur Ordnungszahl 8 und die Angabe "Gewicht" belegt 8 Bit beginnend mit der Ordnungszahl 9 bis zur Ordnungszahl 16

Da der Zeitbedarf größer ist, sind im R/W-Bereich vornehmlich die Parameter gespeichert, die nicht mit großer Geschwindigkeit erfasst werden müssen, wie es bei schnellen Arbeitsschritten mit einer großen Anzahl von waschbaren Produkten nötig ist. Dies ist in Behandlungsstationen, in denen bereits das waschbare Produkt vereinzelt ist, zum Beispiel auf Packtischen, Reparaturplätzen und bei Trocken- und Bügelvorgängen, der Fall.

**Bezugszeichenliste**

| | | | |
|---|---|---|---|
| 10 | Speicherbereich TID | 50 | Spalte Ordnungszahl |
| 12 | Speicherbereich EPC | 52 | Spalte Benennung |
| 14 | Speicherbereich R/W | 54 | Zahl Möglichkeiten |
| 16 | Vorgang | 56 | Spaltenfeld Abstufungen |
| 18 | Vorgang | | |
| 20 | Vorgang | | |
| 22 | Verzweigungsstelle | | |
| 24 | Vorgang | | |
| 26 | Vorgang | | |
| 28 | Vorgang | | |
| 30 | Vorgang | | |
| 32 | Vorgang | | |
| 34 | Vorgang | | |
| 36 | Vorgang | | |
| 38 | Vorgang | | |
| 40 | Verzweigungsstelle | | |
| 42 | Vorgang | | |
| 44 | Vorgang | | |
| 46 | Vorgang | | |
| 48 | Vorgang | | |

## Patentansprüche

1. Wäscheetikett welches mit einem waschbaren Produkt verbunden ist und ein Chipmodul mit einem fernlesbaren Speicher umfasst, wobei im Speicher des Chipmoduls wäschespezifische Angaben gespeichert sind, **dadurch gekennzeichnet, dass** der Speicher des Chipmoduls in einen Speicherbereich EPC (12) unterteilt ist, der zur Speicherung von Produkt-Codes nach GS1 "Global Standards" ausgelegt ist sowie mindestens 64 Bit und höchstens 204 Bit umfasst und in einen Speicherbereich TID (10) zur Speicherung einer individuellen Transponderidentifikationsnummer ausgelegt ist, aber in dem Speicherbereich EPC (12) anstelle des Produkt-Codes nach GS1 wenigstens die wäschespezifischen Angaben des Produkts gespeichert sind, wobei:
allen wäschespezifischen Angaben, wie Artikelart, Artikelgröße, Material, Waschtemperatur, natürliche Dualzahlen zugeordnet sind,
jede wäschespezifische Angabe durch einen Zahlenbereich von der niedrigsten bis zur höchsten natürlichen Zahl die maximalen Varianten der jeweiligen wäschespezifischen Angabe in praxisüblichen Abstufungen abgedeckt ist,
diesem Zahlenbereich eine individuelle Position in einem seriellen Datenwort zugeordnet ist
und das serielle Datenwort verknüpft mit der Transponderidentifikationsnummer im Speicherbereich TID (10) nach Maßgabe eines Algorithmus verschlüsselt ist und
als Gesamtheit der wäschespezifischen Angaben anstelle des EPC-Codes im Speicherbereich EPC (12) des Chipmoduls gespeichert ist.

2. Wäscheetikett nach Anspruch 1, **dadurch gekennzeichnet, dass** als weitere wäschespezifische Angabe die Anzahl der durchgeführten Waschgänge gespeichert ist und der Speicherbereich EPC (12) zur Aktualisierung der Anzahl der durchgeführten Waschgänge auch beschreibbar ist.

3. Wäscheetikett nach Anspruch 1 oder 2, **dadurch gekennzeichnet, dass** im Datenwort zusätzlich eine Signatur gespeichert ist, mittels der die Gültigkeit des verschlüsselt gespeicherten Datenworts nach dessen Decodierung überprüfbar ist.

4. Wäscheetikett nach einem der Ansprüche 1 bis 3, **dadurch gekennzeichnet, dass** im Datenwort zusätzlich benutzerspezifische Angaben, wie Name, Adresse oder geografische Koordinaten gespeichert sind.

5. Wäscheetikett nach einem der Ansprüche 1 bis 4, **dadurch gekennzeichnet, dass** im Datenwort zusätzlich Versionsangaben, mittels denen über eine Datenbank Angaben über unterschiedliche Strukturen des Datenworts verfügbar sind, gespeichert sind.

6. Wäscheetikett nach Anspruch 5, **dadurch gekennzeichnet, dass** Angaben über unterschiedliche Strukturen des Datenworts Inhalte der Angaben im Datenwort sowie deren Bit-Position oder Ordnungszahl und deren Bit-Länge oder Stellenzahl beinhalten.

7. Wäscheetikett nach einem der Ansprüche 1 bis 6, **dadurch gekennzeichnet, dass** mittels der im Datenwort gespeicherten Angaben Wasch- und/oder logistische Einrichtungen steuerbar sind.

8. Wäscheetikett nach einem der Ansprüche 1 bis 6, **dadurch gekennzeichnet, dass** der Speicher des Chipmoduls zusätzlich in einen Speicherbereich R/W (14) unterteilt ist, in dem analog zum Speicherbereich EPC (12) ebenfalls Angaben wie Eigentümer, Gewicht, Herstellungsjahr verschlüsselt gespeichert sind, wobei die Angaben im Speicherbereich R/W (14) nur im vereinzelten Zustand des Wäscheetiketts nach Aufforderung durch ein Lesegerät lesbar und beschreibbar sind.
